# FASCICULE DE BREVET EUROPEEN

(11) **EP 1 524 250 B1**
(45) Date de publication et mention de la délivrance du brevet: **07.05.2008**
(21) Numéro de dépôt: 04292318.5
(22) Date de dépôt: 29.09.2004
(51) Int. Cl.: C04B 28/14

(54) **Utilisation d'une composition à base de liants durcissables à l'eau ou à l'air à l'obtention d'un produit ayant l'aspect et les propriétés d'une pierre naturelle**
Verwendung einer wasser- oder lufthärtenden Bindemittelzusammensetzung zur Herstellung von Produkten mit der Erscheinungsform und den Eigenschaften von Naturstein
Use of a water or air hardening binder composition for fabrication of products having outward form and properties of natural stone

(30) Priorité: 13.10.2003 FR 0312011
(43) Date de publication de la demande: 20.04.2005
(73) Titulaire: Laboratoire d'Etudes et de Recherches sur les Materiaux L.E.R.M., 13200 Arles (FR)
(72) Inventeur: Houdusse, Olivier, 13200 Arles (FR); Zoubir, Ahmed, 13200 Arles (FR)
(74) Mandataire: Keib, Gérard

(56) Documents cités:
- EP-A- 0 611 735
- EP-A- 0 774 445
- DE-A- 2 437 544
- DE-A1- 3 048 506
- FR-A- 2 201 387
- GB-A- 1 077 665
- DATABASE WPI Section Ch, Week 198422 Derwent Publications Ltd., London, GB; Class L02, AN 1984-136597 XP002276782 & JP 59 069462 A (KAWASAKI HEAVY IND LTD) 19 avril 1984 (1984-04-19)
- DATABASE WPI Section Ch, Week 199013 Derwent Publications Ltd., London, GB; Class J01, AN 1990-096173 XP002276784 & JP 02 048905 A (KAWASAKI STEEL CORP) 19 février 1990 (1990-02-19)

## Description

La présente invention concerne l'utilisation d'une composition comprenant des liants durcissables à l'eau et à l'air, présentant après durcissement des propriétés au moins comparables à celles d'une pierre naturelle.

L'invention vise également l'application de la composition selon l'invention à la réalisation d'objets moulés ayant l'aspect et les propriétés de la pierre, en particulier d'oeuvres et de statues, de dalles, pavés, mobilier urbain et intérieur, cheminées et objets analogues.

Parmi les liants hydrauliques connus, on connaît notamment la chaux, le plâtre et le ciment.

La chaux qui est connue depuis très longtemps, a été utilisée autrefois notamment dans la construction, par exemple pour sceller les pierres.

La chaux est beaucoup moins utilisée depuis la découverte du ciment qui permet de réaliser des mortiers, des bétons et des objets moulés ayant des propriétés mécaniques nettement supérieures à celles pouvant être obtenues à partir de la chaux.

Les objets et enduits réalisés à partir de ciment présentent l'inconvénient majeur de nécessiter des durées de durcissement longues qui ralentissent considérablement les cadences de fabrication.

D'autre part, les mortiers et bétons obtenus à partir de ciment subissent un retrait lors de leur durcissement ce qui favorise la formation de microfissures qui fragilisent les objets moulés.

Par ailleurs, lorsqu'on coule du mortier ou du béton dans un moule, la matière coulée n'est en général pas auto-plaçante, de sorte qu'il est nécessaire d'utiliser des outils pour malaxer, faire vibrer ou aplanir la surface de la matière.

Le plâtre est couramment utilisé pour mouler des objets divers.

Cependant, le plâtre ne résiste pas au contact de l'eau, de sorte que les objets moulés en plâtre ne peuvent pas être utilisés à l'extérieur.

De plus, les propriétés mécaniques du plâtre sont nettement inférieures à celles du béton.

Le but de la présente invention est de remédier aux inconvénients ci-dessus en proposant une composition durcissable à l'eau et à l'air présentant après durcissement des propriétés au moins comparables à celles d'une pierre naturelle sans présenter les inconvénients de ce dernier.

Suivant l'invention, cette composition est caractérisée en ce qu'elle renferme, en tant que liants :
- de la chaux hydraulique naturelle et aérienne, et
- du plâtre de moulage.

On entend par chaux hydraulique un mélange renfermant du Ca(OH)₂ essentiellement et une faible teneur de silicate de calcium. La chaux aérienne est du Ca(OH)₂. Ces définitions excluent la chaux vive et la chaux éteinte.

Il a été constaté de façon surprenante que le mélange de deux liants (plâtre et chaux hydraulique) a priori incompatibles, connus et utilisés séparément depuis très longtemps, permettait d'obtenir des produits ayant des propriétés inattendues à l'égard de celles connues pour chacun de ces liants.

Les avantages et aspects innovants de la composition selon l'invention, sont précisés ci-après :
- le premier avantage de cette composition réside dans le fait qu'elle permet d'obtenir un matériau minéral ayant l'aspect (interne et externe) d'une pierre à copier,
- le second correspond au fait que les caractéristiques physiques du matériau créé sont très proches du matériau à imiter : dureté, absorption, masse volumique, porosité, résistance, etc...,
- le troisième correspond à l'utilisation d'un mélange de deux liants : liants sulfatiques (plâtre) et chaux (aérienne et hydraulique naturelle),
- le quatrième point, d'ordre technique, permet de mouler des pièces difficiles et complexes avec un aspect de surface très satisfaisant et d'obtenir de fortes résistances à courte échéance (résistance équivalente à celle d'une pierre calcaire après 15 minutes à 3 h),
- le cinquième point correspond à l'absence de retrait et permet donc de minimiser la micro-fissuration du matériau relative à la dessiccation de celui-ci (problème fréquemment rencontré sur les produits existants).

Par ailleurs, un autre aspect important du matériau obtenu selon l'invention est qu'il peut se décliner en différentes gammes de produits permettant d'obtenir des caractéristiques différentes à l'état frais ou durci en fonction du matériau à imiter ou du type de mise en oeuvre (mortier de ragréage, matériau pour moulage, matériau auto-plaçant, absence de bullage, aspect, veinage...), par simple modification des différentes proportions des différents ingrédients.

La composition selon l'invention renferme en outre des charges minérales, calcaires et / ou siliceuses, suivant les propriétés que l'on souhaite obtenir.

La composition selon l'invention renferme en outre un adjuvant fluidifiant et réducteur d'eau du type utilisé dans les compositions actuelles dans les matériaux artificiels (à base de ciment, de plâtre, etc...).

A titre d'exemple, cet adjuvant peut être le superplastifiant haut réducteur d'eau CIMFLUID 2002 de chez Axim (adjuvant de nouvelle génération à base de polycarboxylate modifié) : dosage de l'ordre de 1 à 3% du liant.

Selon une version avantageuse de l'invention, la composition renferme en outre au moins un adjuvant choisi dans le groupe comprenant un retardateur de prise, un agent anti-bullage, un entraîneur d'air et leurs mélanges.

A ce titre, on citera en particulier les deux adjuvants suivants :

Retardateur (Retardant P de la société Lafarge Prestia) : dosage à adapter en fonction de la température extérieure et du temps de prise désiré (0% correspond à environ 10 à 15 min et 1 % de l'ordre de 1 heure de retard de prise), adjuvant en poudre,

Cimparement (Agent antibullage à base de polymère synthétique et d'éther alcool) : dosage de l'ordre de 0,1 à 0,5%, adjuvant liquide.

En fonction du résultat recherché, la proportion en poids de la chaux et celle du plâtre est comprise entre 25 et 75% du poids total de ces deux liants.

Par ailleurs, la quantité de charges minérales est comprise entre 0,5 et 6 fois le poids des deux liants.

D'autre part, la proportion en poids des adjuvants peut être comprise entre 0 et 5% des liants.

On donne ci-après deux exemples de formulation de la composition selon l'invention :

| Nature des constituants | | Matériau 1 : Pierre calcaire tendre type pierre de Fontvieille | Matériau 2 : Pierre plus dure type marbre |
|---|---|---|---|
| 1. | Chaux hydraulique NHL | 315 Kg / m³ | 500 Kg / m³ |
| 2. | Plâtre de moulage | 315 Kg / m³ | 500 Kg / m³ |
| 3. | Charge calcaire fine (0/0,6 mm) : mélange de poudre de marbre broyé | 750 Kg / m³ | 500 Kg / m³ |
| 4. | Charge siliceuse (0/0,6 mm) | 450 Kg / m³ | - |
| 5. | Fine siliceuse | 80 Kg / m³ | - |
| 6. | Adjuvant fluidifiant nouvelle génération | 18 Kg / m³ | 20 Kg / m³ |
| 7. | Autres adjuvants : retardateur, agent antibullage, entraîneur d'air, etc... | 1 à 5 Kg / m³ | 1 à 5 Kg / m³ |
| 8. | Eau | 300 Kg / m³ | 350 Kg / m³ |

Un des avantages de la composition selon l'invention réside dans le fait qu'il peut être mis en ceuvre de manière relativement simple avec différents types de matériel. Des essais ont été réalisés avec des malaxeurs de laboratoire, des malaxeurs industriels, des bétonnières, et un système d'agitation sur perceuse électrique. L'impact de l'utilisation de ces différents types de matériels est reporté sur le temps de malaxage. En effet, l'énergie de malaxage est un facteur important et permet aux adjuvants de jouer leur rôle de fluidifiant. Ainsi, plus l'énergie de malaxage est faible et plus le temps de malaxage devra être long afin d'obtenir un matériau pouvant être mis en place.

Ainsi, la solution la plus facile pour le malaxage est d'introduire tous les éléments secs (ou mélange pré-formulé) puis d'introduire progressivement l'eau avec les adjuvants. Le matériau passe de l'état d'une terre sèche, à humide et enfin autoplaçante.

Le temps de malaxage est généralement compris entre 1 et 10 minutes en fonction du matériau et du matériel utilisés.

En fonction du type d'application (moulage, dallage, mortier de ragréage, etc...) la rhéologie du matériau frais sera différente (matériaux auto-plaçants pour le moulage et, onctueux et collant pour les mortiers de ragréage).

Le durcissement du matériau (et donc le démoulage si nécessaire) a lieu entre 15 minutes et 3 h après le début du malaxage. Ce paramètre peut néanmoins être facilement adapté en fonction des contraintes. Ce point est un point important de l'innovation. En effet, il permet d'augmenter la cadence de démoulage dans le domaine de la préfabrication d'objets ou de pièces en béton, actuellement réalisés avec du ciment.

Aucune cure n'est nécessaire, étant donné que le matériau n'a pas de retrait d'auto-dessiccation et que l'augmentation des résistances se fait essentiellement à l'air par carbonatation de la chaux.

Afin de mettre en évidence les caractéristiques des matériaux obtenus selon l'invention et des matériaux à base de ciment, différents essais ont été réalisés sur ces matériaux. La comparaison des résultats obtenus avec ceux indiqués sur les fiches produits fournies par les carriers, est présentée dans le tableau ci-après :

| | Pierre de Provence (Estaillades) | Formulation selon l'invention | Formulation ciment |
|---|---|---|---|
| Masse volumique apparente (Kg / m³) | 1850 à 1950 | 1850 | 2100 |
| Temps de prise | Sans objet | 1 h | 6 à 12h |
| Porosité (%) | 27 à 31 | 25 | 19 |
| Coefficient de capillarité C₁ (g/(m².sec^{0,5})) | 70 | 65 | 29 |
| Vitesse du son (m/s) | 2400 à 3200 | 2610 | 3500 |
| Résistance mécanique en compression (MPa) | 10 à 25 | 7 (après 2h) | 4 (après 12h) |
| | | 10 (après 3 j) | 25 (après 3 j) |
| | | 15 (après 28 j) | 40 (après 28 j) |
| | | 25 (après 90 j) | 40 (après 90 j) |
| | | 40 (à long terme) | 40 (à long terme) |
| Résistance mécanique en flexion (MPa) | 3 à 6 | 8 | 7 |
| Résistance aux cycles de gels-dégels (nombre de cycles) | 40 | 40 | 35 |
| Dureté superficielle à 28 jours (mm) | 0,7 | 0,6 | 0,3 |
| Retrait (µm/m) | Sans objet | 50 | -700 |
| Gonflement (µm/m) | Sans objet | 200 | 200 |

L'analyse des résultats mentionnés dans le tableau ci-dessus met en évidence les principales indications suivantes :
- la masse volumique de la formulation selon l'invention est environ 15% plus faible que celle de la formulation à base de ciment et du même ordre de grandeur que la pierre naturelle,
- les caractéristiques générales du matériau selon l'invention, sont très proches de celles des pierres calcaires du type Pierre de Provence,
- les principaux avantages de la formulation selon l'invention, comparativement à la formulation ciment sont : meilleure résistance à court terme, l'absence de retrait et une plus faible densité. Par ailleurs, les résistances à long terme et la dureté des deux matériaux (formulation selon l'invention et formulation ciment) sont du même ordre de grandeur.

Les essais ont montré d'une part que la formulation selon l'invention pouvait apporter de nombreux avantages au niveau du procédé de fabrication de matériaux ayant l'aspect de pierres calcaires (par rapport aux formulations actuellement utilisées à base de ciment). D'autre part, la formulation à base de ciment est de par sa nature (type de liant) difficilement optimisable (voir tableau ci-après). En effet, les caractéristiques de cette formulation ne peuvent être améliorées sans une modification profonde des différents composants utilisés.

| Caractéristiques | Formulation à base de ciment | Formulation selon l'invention |
|---|---|---|
| Temps de durcissement avant démoulage | 6 à 12h | 2 à 3h (optimisation de l'utilisation de l'outillage et des équipes de travail) |
| Résistance au démoulage | 3 MPa | 7 MPa (permet un démoulage moins risqué et plus facile) |
| Résistance à long terme | 30 à 40 MPa | 25 à 30 MPa |
| Ouvrabilité | Passage de main obligatoire ou vibration | Meilleure ouvrabilité, mise en oeuvre plus facile |
| Bullage | Important : Passage de main obligatoire ou vibration | Fortement diminué : facilité de mise en oeuvre |
| Autres | Passage de main obligatoire ou vibration | Pas de passage de main (amélioration des conditions de travail et du résultat) |

Du fait des caractéristiques mentionnées ci-dessus, l'invention, peut être appliquée à la réalisation d'objets moulés ayant l'aspect et les propriétés de la pierre, en particulier d'oeuvres et de statues, de dalles, pavés, mobilier urbain ou intérieur, cheminées et objets analogues.

## Revendications

1. Utilisation d'une composition à base de chaux et de plâtre durcissable à l'eau et à l'air pour réaliser des objets moulés ayant l'aspect et les propriétés de la pierre, en particulier, d'oeuvres et de statues, de dalles, pavés, mobilier urbain ou intérieur, cheminées et objets analogues, **caractérisée en ce que** la composition renferme de la chaux hydraulique et du plâtre de moulage, la proportion en poids de la chaux hydraulique et celle du plâtre de moulage étant comprise entre 25 et 75% du poids total de ces deux constituants, la composition renfermant en outre des charges minérales dont la quantité est comprise entre 0,5 et 6 fois le poids des deux constituants ainsi qu'un adjuvant fluidifiant et un réducteur d'eau.

2. Utilisation selon la revendication 1, **caractérisée en ce que** les charges minérales sont des charges calcaires et/ou siliceuses.

3. Utilisation selon l'une des revendications 1 ou 2, **caractérisée en ce qu**'elle renferme en outre au moins un adjuvant choisi dans le groupe comprenant un retardateur de prise, un agent anti-bullage, un entraîneur d'air et leurs mélanges.

## Claims

1. Use of a composition comprising lime and water- and air-hardenable plaster to realise moulded objects having the aspect and the properties of the stone, in particular, of structures and of statutes, of slabs, paving blocks, city or interior furniture, chimneys and analogous objects, **characterised in that** the composition includes hydraulic lime and moulding plaster, the proportion in weight of hydraulic lime and that of moulding plaster ranging between 25 and 75% of the total weight of both these binders, the composition including moreover mineral loads whose quantity ranges between 0.5 and 6 times of the total weight of both these binders and a fluidising adjuvant and a water-reducing adjuvant.

2. Use of the composition according to claim 1, **characterised in that** the mineral loads are calcareous and/or siliceous loads.

3. Use of the composition according to anyone of claims 1 or 2, **characterised in that** it includes additionally at least one adjuvant selected among the group comprising a set retardant, an anti-bubbling agent, an air entrainer and the mixtures thereof.

## Patentansprüche

1. Verwendung einer wasser- und lufthärtenden Zusammensetzung auf der Basis von Kalk und Gips zur Herstellung von Gussstücken mit dem Aussehen und Eigenschaften von Naturstein, insbesondere von Bauten, Statuen, Platten, Pflastersteinen, Stadtmöblierung oder Innenmöblierung, Kaminen und ähnlichen Objekten, **dadurch gekennzeichnet, dass** die Zusammensetzung hydraulischen Kalk und Formgips enthält, wobei der Gewichtsanteil des hydraulischen Kalks und des Formgipses zwischen 25 und 75 % des Gesamtgewichts dieser beiden Bestandteile beträgt, wobei die Zusammensetzung außerdem mineralische Füllstoffe enthält, deren Menge zwischen dem 0,5- und 6-fachen des Gewichts der beiden Bestandteile beträgt, sowie einen Verflüssigungszusatz und ein Wasserreduzierungsmittel.

2. Verwendung nach Anspruch 1, **dadurch gekennzeichnet, dass** die mineralischen Füllstoffe Kalk- und/oder Silicatfüllstoffe sind.

3. Verwendung nach einem der Ansprüche 1 oder 2, **dadurch gekennzeichnet, dass** sie außerdem mindestens einen Zusatz enthält, der aus der Gruppe ausgewählt ist, die einen Abbindungsverzögerer, ein Mittel gegen Blasenbildung, einen Belüfter und ihre Mischungen umfasst.
